# EUROPÄISCHE PATENTSCHRIFT

(11) **EP 1 091 796 B1**
(45) Veröffentlichungstag und Bekanntmachung des Hinweises auf die Patenterteilung: **23.07.2003**
(21) Anmeldenummer: 99931156.6
(22) Anmeldetag: 23.06.1999
(51) Int. Cl.: B01D 53/14

(54) **VERFAHREN ZUR ENTFERNUNG SAURER GASBESTANDTEILE AUS GASEN**
METHOD FOR REMOVING ACID GAS COMPONENTS FROM GASES
PROCEDE PERMETTANT D'ELIMINER D'UN GAZ SES COMPOSANTS ACIDES

(30) Priorität: 29.06.1998 DE 19828977
(43) Veröffentlichungstag der Anmeldung: 18.04.2001
(73) Patentinhaber: BASF AKTIENGESELLSCHAFT, 67056 Ludwigshafen (DE)
(72) Erfinder: GROSSMANN, Christoph, D-67117 Limburgerhof (DE); HÄNZEL, Karl-Heinz, D-67489 Kirrweiler (DE); KOLASSA, Dieter, D-67117 Limburgerhof (DE); ASPRION, Norbert, D-68163 Mannheim (DE)
(74) Vertreter: Isenbruck, Günter
(86) Internationale Anmeldenummer: EP9904366
(87) Internationale Veröffentlichungsnummer: WO00000271

(56) Entgegenhaltungen:
- EP-A- 0 705 637
- DE-A- 2 551 717
- DE-A- 2 804 418
- US-A- 4 217 238
- US-A- 5 277 885
- US-A- 5 281 254
- US-A- 5 480 860

## Beschreibung

Die Erfindung betrifft ein Verfahren zur Entfernung saurer Gasbestandteile wie CO₂ und H₂S aus Gasen mit einem Absorptionsmittel, das Absorptionsmittel selbst sowie seine Verwendung.

Es ist bekannt, unerwünschte saure Gasbestandteile, wie CO₂, H₂S oder COS, aus diese Bestandteile enthaltenden Gasen durch Gaswäsche mit wäßrigen oder nichtwäßrigen Gemischen organischer Lösungsmittel als Absorptionsmittel zu entfernen. Dabei kommen sowohl physikalische als auch chemische Lösungsmittel zum Einsatz. Bekannte physikalische Lösungsmittel sind beispielsweise Cyclotetramethylensulfon, N-Methylpyrrolidon und N-alkylierte Piperidone. Bei den chemischen Lösungsmitteln haben sich insbesondere die wäßrigen Lösungen von primären, sekundären und tertiären aliphatischen Aminen bzw. Alkanolaminen wie Monoethanolamin (MEA), Diethanolamin (DEA), Monomethylethanolamin (MMEA), Diethylethanolamin (DEEA), Triethanolamin (TEA), Diisopropanolamin (DIPA) und Methyldiethanolamin (MDEA) technisch bewährt. Amine wirken als Basen, wobei in Gegenwart von Wasser mit CO₂ die entsprechenden Ammoniumcarbonate oder -hydrogencarbonate und mit H₂S die entsprechenden Ammoniumsulfide oder -hydrogensulfide gebildet werden. Primäre und sekundäre Amine können ferner mit CO₂ unter Bildung von Carbamaten reagieren.

Um die Absorptionsgeschwindigkeit der Lösungsmittelgemische für CO₂, H₂S und COS zu steigern, werden die genannten aliphatischen Amine bzw. Alkanolamine mit bestimmten gesättigten Stickstoffheterocyclen wie Piperazin oder Morpholin eingesetzt. In DE-A 25 51 717 ist ein Verfahren zur Entfernung von CO₂ und/oder H₂S und gegebenenfalls COS aus Gasen durch eine Wäsche mit Absorptionsmitteln, welche Piperazin und aliphatische Alkanolamine in wäßriger Lösung enthalten, beschrieben. Gemäß den Angaben in dieser Schrift wirkt Piperazin als Beschleunigersubstanz für die Absorption. Daher wird Piperazin gemäß dieser Lehre bevorzugt in katalytischen Mengen als Absorptionsbeschleuniger in wäßriger Lösung zusammen mit an sich bekannten physikalischen oder chemischen Lösungsmitteln oder deren Gemischen eingesetzt. Die genannte Schrift offenbart auch die Verwendung von Piperazin in Mischung mit physikalischen Lösungsmitteln, wie Methanol, N-Methylpyrrolidon und Polyethylenglykoldimethylether, wobei wegen der Carbamatbildung des Piperazins nur weitgehend verdünnte wäßrige Lösungen eingesetzt werden können. Piperazin wird daher vorzugsweise in wäßriger Lösung mit chemischen Lösungsmitteln, bevorzugt mit tertiären aliphatischen Alkanolaminen, eingesetzt.

Die bekannten Lösungsmittelgemische besitzen den Nachteil, daß Piperazin in diesen Gemischen vorrangig die Absorptionsgeschwindigkeit von CO₂ beeinflußt, die Löslichkeit von Piperazin in wäßrigen Lösungen aliphatischer Alkanolamine, wie MDEA, aber begrenzt ist.

DE-A 2 804 418 offenbart ein Verfahren zur absorptiven Abgasreinigung sowie ein Absorptionsmittel, das einen Aminoalkohol, ein sterisch gehindertes Amin und ein physikalisches Lösungsmittel enthält. Als sterisch gehinderte Amine werden substituierte Piperidine, nämlich 2-Piperidinmethanol, 2-Piperidinethanol, 2-(1-Hydroxyethyl)-piperidin, 5-Hydroxy-2-methylpiperidin, 2-Methyl-3-hydroxypiperidin, 2,6-Dimethyl-3-hydroxypiperidin und 2,5-Dimethyl-4-hydroxypiperidin genannt. Die in den Beispielen beschriebenen Absorptionsmittel enthalten nur geringe Mengen Wasser.

US 5,281,254 offenbart ein Absorptionsmittel für CO₂ auf Aminbasis. Als Amin wird 2-Hydroxyethylpiperazin genannt. Ferner kann das Absorptionsmittel einen Alkohol enthalten. Die Gegenwart von Wasser als Bestandteil wird nicht erwähnt.

Aufgabe der Erfindung ist es, ein flüssiges Absorptionsmittel zur Entfernung saurer Gasbestandteile aus Gasen bereitzustellen, das neben einer hohen Absorptionsgeschwindigkeit eine hohe Kapazität für saure Gasbestandteile aufweist.

Gelöst wird die Aufgabe durch ein Verfahren zur Entfernung saurer Gasbestandteile, aus der Gruppe bestehend aus CO₂, H₂S, COS, CS₂ und Merkaptanen, aus Gasen, bei dem in einem Absorptionsschritt ein an sauren Gasbestandteilen reiches Rohgas in Kontakt mit einem Absorptionsmittel gebracht wird, wodurch ein an sauren Gasbestandteilen armes Reingas und ein mit sauren Gasbestandteilen beladenes Absorptionsmittel erhalten wird, dadurch gekennzeichnet, daß als Absorptionsmittel ein Gemisch enthaltend
a) 5 bis 30 Gew.-% eines oder mehrerer unsubstituierter und/oder mit OH, C₁-C₃-Alkyl und/oder C₁-C₃-Hydroxyalkyl ein- oder mehrfach am Kohlenstoff substituierter mono- oder bicyclischer Stickstoff-Heterocyclen mit 5 bis 14 Ringatomen und pro Ring 2 heterocyclisch gebundenen Stickstoffatomen als Komponente A,
b) 2 bis 45 Gew.-% eines ein- und/oder mehrwertigen Alkohols als ohne Aminogruppe Komponente B,
c) 0 bis 60 Gew.-% eines aliphatischen Alkanolamins als Komponente C,
d) 30 bis 70 Gew.-% Wasser als Komponente D,
e) 0 bis 35 Gew.-% K₂CO₃ als Komponente E,
wobei die Summe der Komponenten A, B, C, D und E sowie 0 bis 5 Gew.-% üblicher Komponenten wie Entschäumer, Korrosionsinhibitoren und Flockungshilfsmittel 100 Gew.-% ergibt,
eingesetzt wird.

Gelöst wird die Aufgabe ferner durch ein flüssiges Absorptionsmittel der oben angegebenen Zusammensetzung.

Gase, welche die genannten sauren Gasbestandteile enthalten, sind beispielsweise Erdgase, Synthesegase, Koksofengase, Kohlevergasungsgase und Kreisgase bei der Ethylenoxid-Herstellung. Diese Gase enthalten neben einem oder mehreren der genannten sauren Gasbestandteile weitere inerte Gasbestandteile, die von dem flüssigen Absorptionsmittel nicht in nennenswertem Maße absorbiert werden. Beispiele sind leichtflüchtige Kohlenwasserstoffe, bevorzugt C₁-C₄-Kohlenwasserstoffe, besonders bevorzugt Methan, ferner Stickstoff und Wasserstoff. Das erfindungsgemäße Verfahren eignet sich unter anderem zur Reinigung dieser Gase durch Entfernung der sauren Gasbestandteile. Die zu reinigenden Gase können CO₂ bevorzugt in Mengen bis zu 75 Vol.-% und H₂S, bevorzugt in Mengen bis zu 50 Vol.-% enthalten. Darüber hinaus können die zu reinigenden Gase COS, bevorzugt in Mengen bis zu 5 Vol.-%, CS₂, bevorzugt in Mengen bis zu 1 Vol.-% und Mercaptane, bevorzugt Alkylmerkaptane, insbesondere Methylmercaptan, bevorzugt in Mengen bis zu 1 Vol.-% enthalten. Das erfindungsgemäße Verfahren ist besonders zur Entfernung von CO₂ und H₂S geeignet.

Das erfindungsgemäße Absorptionsmittel enthält als Komponente A 5 bis 30 Gew.-%, bevorzugt 8 bis 25 Gew.-% eines oder mehrerer unsubstituierter und/oder mit OH, C₁-C₃-Alkyl und/oder C₁-C₃-Hydroxyalkyl ein- oder mehrfach am Kohlenstoff substituierter mono- oder bicyclischer Stickstoff-Heterocyclen mit 5 bis 14 Ringatomen und pro Ring 2 heterocyclisch gebundenen Stickstoffatomen. Bicyclische Heterocyclen sind solche, die zwei anellierte Ringe oder zwei über eine Einfachbindung gebundene Ringe aufweisen. Bevorzugt sind diese über Kohlenstoffatome gebunden. Die Ringe können weitere Heteroatome, beispielsweise Sauerstoff oder Schwefel, aufweisen. Beispiele sind Pyrazolidin, Imidazolidin, Piperazin, Hexahydropyrimidin, Diazepan, Oktahydrobenzimidazol, Oktahydropurin, Dekahydrochinazolin, Dekahydropteridin, 2-[2-Imidazolidyl]-imidazolidin, 2-[3-Pyrrolidyl]-piperazin, 3-[2-Piperazinyl]-piperidin und 2-[2-Piperazinyl]-piperazin. Die genannten Heterocyclen können mit OH, Methyl, Ethyl, Propyl, Hydroxymethyl, Hydroxyethyl und Hydroxypropyl ein oder mehrfach substituiert sein.

Bevorzugt enthält das erfindungsgemäße Absorptionsmittel als Komponente A unsubstituiertes und/oder ein oder mehrere mit OH, C₁-C₃-Alkyl und/oder C₁-C₃-Hydroxyalkyl ein- oder mehrfach am Kohlenstoff substituiertes Piperazin. Besonders bevorzugt enthält das erfindungsgemäße Absorptionsmittel als Komponente A unsubstituiertes Piperazin.
Das flüssige Absorptionsmittel enthält als Komponente B 2 bis 45 Gew.-%, bevorzugt 3 bis 35 Gew.-% eines mehrwertigen Alkohols. Mehrwertige Alkohole im Sinne der Erfindung sind nur solche, die neben mehreren alkoholischen Hydroxylgruppen keine Aminogruppen aufweisen. Alkanolamine gelten somit nicht als mehrwertige Alkohole. Geeignete mehrwertige Alkohole sind beispielsweise C₂-C₈-Alkandiole, C₃-C₁₀-Alkantriole, C₄- C₁₂-Alkantetraole, C₅-C₁₆-Alkanpentaole, C₆-C₂₀-Alkanhexaole, beispielsweise Ethylenglykol, Propylenglykol, Glycerin, Butandiole, Butantriole, Pentandiole, Trimethylolpropan, Neopentylglykol, Pentaerythritol, sowie oligomere Ether mehrwertiger Alkohole, wie Diethylenglykol und Triethylenglykol, bevorzugt Diethylenglykol, oder Diglycerin und Triglycerin, ferner Zuckeralkohole.

Bevorzugte mehrwertige Alkohole weisen einen Siedepunkt von > 180°C auf. Bevorzugte mehrwertige Alkohole sind Ethylenglykol, Propylenglykol, 1,3-Propandiol, Glycerin, Trimethylolpropan, Neopentylglykol, 1,2,4-Butantriol, 2,5-Dimethyl-2,5-hexandiol, 1,4-Butandiol, 2,3-Butandiol, 1,2-Pentandiol und 1,5-Pentandiol.

Von den ein- und mehrwertigen Alkoholen sind die mehrwertigen Alkohole generell bevorzugt, insbesondere bevorzugt sind Glycerin, 1,3-Propandiol, Neopentylglykol und Trimethylolpropan. Speziell bevorzugt ist Glycerin.

Das flüssige Absorptionsmittel enthält 0 bis 60 Gew.-% eines aliphatischen Alkanolamins als Komponente C. Geeignete aliphatische Alkanolamine sind beispielsweise die üblicherweise als chemische Lösungsmittel für saure Gasbestandteile eingesetzten aliphatischen Alkanolamine wie Diisopropanolamin (DIPA), Monoethanolamin (MEA), Diethanolamin (DEA), Triethanolamin (TEA), Methyldiethanolamin (MDEA), Monomethylethanolamin (MMEA), Diethylethanolamin (DEEA), Aminodiglykol (ADG) und 3-Diethylamino-1,2-propandiol (DEAPD). Bevorzugt ist MDEA.

Als Komponente D enthält das flüssige Absorptionsmittel 30 bis 70 Gew.-% Wasser.

Darüberhinaus kann als weiteres chemisches Absorptionsmittel K₂CO₃ als Komponente E enthalten sein, bevorzugt in Mengen bis zu 35 Gew.-%.

Das flüssige Absorptionsmittel kann weitere übliche Komponenten wie Entschäumer, Korrosionsinhibitoren und Flockungshilfsmittel, bevorzugt in Mengen von 0 bis 5 Gew.-%, besonders bevorzugt 0 bis 1 Gew.-% enthalten.

In einer Ausführungsform enthält das erfindungsgemäße Absorptionsmittel die Komponenten A, B und D und nicht die Komponente C und E. In diesem Fall besteht das flüssige Absorptionsmittel bevorzugt nur aus den Komponenten A, B und D.

In einer speziell bevorzugten Variante dieser Ausführungsform besteht das flüssige Absorptionsmittel aus 15 bis 30 Gew.-% Piperazin, 3 bis 35 Gew.-% Glycerin, 1,3-Propandiol, Neopentylglykol oder Trimethylolpropan und 35 bis 72 Gew.-% Wasser.

In einer weiteren Ausführungsform enthält das erfindungsgemäße Absorptionsmittel die Komponenten A, B, C und D und nicht die Komponente E. In einer speziell bevorzugten Variante dieser Ausführungsform besteht das flüssige Absorptionsmittel aus 8 bis 20 Gew.-% Piperazin, 3 bis 35 Gew.-% Glycerin, 20 bis 50 Gew.-% MDEA und 30 bis 69 Gew.-% Wasser.

Das erfindungsgemäße Absorptionsmittel weist gegenüber den aus dem Stand der Technik bekannten Absorptionsmitteln eine Reihe von Vorteilen auf.

Das erfindungsgemäße Absorptionsmittel weist bei Verwendung der Komponente A anstelle der Komponente C eine deutlich höhere Beladbarkeit (Gleichgewichtsbeladung) mit CO₂ auf. Unter Beladbarkeit wird die Aufnahmefähigkeit des Absorptionsmittels für den betreffenden sauren Gasbestandteil (hier CO₂) verstanden. Diese ist um so größer, je mehr der Komponente A anstelle der Komponente C das erfindungsgemäße Absorptionsmittel enthält. Bei vergleichbarem Gesamtamingehalt ist auch die Beladbarkeit des erfindungsgemäßen Absorptionsmittels mit H₂S deutlich höher als in einem Absorptionsmittel nach dem Stand der Technik.

Zusätzlich zu der löslichkeitsvermittelnden Wirkung des aliphatischen Alkanolamins tritt die löslichkeitsvermittelnde Wirkung des ein- oder mehrwertigen Alkohols (Komponente B) für die Komponente A. Es zeigt sich, daß die Löslichkeit der Komponente A in dem erfindungsgemäßen Absorptionsmittel in Gegenwart eines ein- oder mehrwertigen Alkohols im allgemeinen deutlich höher ist als die Löslichkeit der Komponente A in Gegenwart eines aliphatischen Amins ohne Verwendung der genannten Alkohole in einem Absorptionsmittel nach dem Stand der Technik. Dadurch können die erfindungsgemäßen Absorptionsmittel die Komponente A in hohen Konzentrationen enthalten, wodurch eine hohe Beladbarkeit mit CO₂ und/oder H₂S bedingt wird. Weiterhin ist die Löslichkeit des Carbamats der Komponente A in dem erfindungsgemäßen Absorptionsmittel deutlich höher als in einem System, das die Komponente C und Wasser, nicht aber die Komponente B als weitere Komponenten enthält. Dadurch werden Probleme durch Fällung von Carbamaten bei hohen CO₂-Konzentrationen vermieden.

Das erfmdungsgemäße flüssige Absorptionsmittel weist ferner eine deutlich höhere Absorptionsgeschwindigkeit für CO₂ und H₂S auf. Die Absorptionsgeschwindigkeit für CO₂ ist bei konstantem molarem Gesamtamingehalt um so höher, je mehr Komponente A und je weniger Komponente C das erfindungsgemäße flüssige Absorptionsmittel enthält. In den erfindungsgemäßen Absorptionsmitteln können besonders hohe Gehalte an der Komponente A realisiert werden. Beispielsweise ist in einem Absorptionsmittel, das Piperazin in einem Gemisch aus Glycerin/Wasser enthält, die Absorptionsgeschwindigkeit für CO₂ gegenüber einem Absorptionsmittel, das bei gleichem molarem Gesamtamingehalt MDEA an Stelle von Piperazin enthält, um bis zu einen Faktor 90 erhöht. Bei vergleichbarem Gesamtamingehalt ist auch die Absorptionsgeschwindigkeit des erfindungsgemäßen Absorptionsmittels mit H₂S deutlich höher als in einem Absorptionsmittel nach dem Stand der Technik.

Das erfindungsgemäße flüssige Absorptionsmittel weist ferner den Vorteil auf, das die Absorptionsgeschwindigkeit von CO₂ im wesentlichen linear mit dem Gehalt an Komponente A ansteigt, die Absorptionsgeschwindigkeit für H₂S für einen bestimmten Gehalt an Komponente A jedoch ein deutliches Maximum aufweisen kann. Bei Erreichen dieses Maximums kann die Absorptionsgeschwindigkeit für H₂S über der Absorptionsgeschwindigkeit für CO₂ liegen, während sie für niedrigere und höhere Piperazingehalte unterhalb der Absorptionsgeschwindigkeit von CO₂ liegen kann. Dadurch ist es möglich, durch Wahl des Gehaltes an Komponente A die Selektivität des erfindungsgemäßen Absorptionsmittels für die Absorption von CO₂ bzw. H₂S zu beeinflussen.

Weitere Vorteile sind die verringerte Neigung zur Schaumbildung, die verringerte Korrosivität, die verringerte Flüchtigkeit von Piperazin und Wasser, die Erniedrigung des Gefrier- und Stockpunktes sowie des Trübungspunktes der erfindungsgemäßen Absorptionsmittel.

Das an sauren Gasbestandteilen reiche Rohgas wird in einem Absorptionsschritt in einem Absorber in Kontakt mit dem erfindungsgemäßen Absorptionsmittel gebracht, wodurch die sauren Gasbestandteile zumindest teilweise ausgewaschen werden. An sauren Gasbestandteilen reiche Rohgase sind beispielsweise die vorstehend genannten Gase, welche einen oder mehrere der sauren Gasbestandteile in den angegebenen Grenzen enthalten können. Als Absorber fungiert vorzugsweise eine in üblichen Gaswäsche-Verfahren eingesetzte Waschvorrichtung. Geeignete Waschvorrichtungen sind beispielsweise Füllkörper-, Pakungs- und Bodenkolonnen, Radialstromwäscher, Strahlwäscher, Venturiwäscher und Rotations-Sprühwäscher, bevorzugt Pakungs-, Füllkörper- und Bodenkolonnen, besonders bevorzugt Packungs- und Füllkörperkolonnen.

Die Temperatur des Absorptionsmittels beträgt im Absorptionsschritt im allgemeinen von 40 bis 100°C, bei Verwendung einer Kolonne beispielsweise 40 bis 70°C am Kopf der Kolonne und 50 bis 100°C am Boden der Kolonne. Der Gesamtdruck beträgt im Absorptionsschritt im allgemeinen von 1 bis 120 bar, bevorzugt von 10 bis 100 bar. Der CO₂-Partialdruck und der H₂S-Partialdruck richten sich nach der Zusammensetzung der Gasmischung, betragen aber vorzugweise bis zu 30 bar für CO₂ und bis zu 20 bar für H₂S. Es wird ein an sauren Gasbestandteilen armes, d.h. an diesen Bestandteilen abgereichertes Reingas und ein mit sauren Gasbestandteilen beladenes Absorptionsmittel erhalten.

In einer bevorzugten Ausführungsform des erfindungsgemäßen Verfahrens wird der Absorptionsschritt in mehreren aufeinanderfolgenden Teilschritten durchgeführt, wobei das die sauren Gasbestandteile enthaltende Rohgas in jedem der Teilschritte mit jeweils einem Teilstrom des Absorptionsmittels in Berührung gebracht wird. Dies kann beispielsweise in der Weise geschehen, daß an unterschiedlichen Stellen des Absorbers ein Teilstrom des Absorptionsmittels zugeführt wird, wobei vorzugsweise die Temperatur des zugeführten Absorptionsmittels in aufeinanderfolgenden Teilschritten vom Boden zum Kopf der Kolonne abnimmt.

Aus dem mit den sauren Gasbestandteilen beladenen Absorptionsmittel können die sauren Gasbestandteile in einem Regenerationsschritt freigesetzt werden, wobei ein regeneriertes Absorptionsmittel erhalten wird. Im Regenerationsschritt wird ganz allgemein die Beladung des Absorptionsmittels verringert. Das erhaltene regenerierte Absorptionsmittel wird vorzugsweise anschließend in den Absorptionsschritt zurückgeführt.

Im allgemeinen beinhaltet der Regenerationsschritt die Druckentspannung des beladenen Absorptionsmittels von einem hohen Druck, wie er bei der Durchführung des Absorptionsschrittes herrscht, auf einen niedrigeren Druck. Die Druckentspannung kann beispielsweise mittels eines Drosselventil geschehen. Statt oder in Ergänzung eines Drosselventils kann eine Entspannungsturbine eingesetzt werden, mit der ein Generator angetrieben und elektrische Energie gewonnen werden oder die Flüssigkeitspumpe des Lösungsmittelkreislaufes angetrieben werden kann.

Die Freisetzung der sauren Gasbestandteile im Regenerationsschritt kann beispielsweise in einer Entspaimungskolonne. z. B. einem senkrecht oder waagerecht eingebauten Flash-Behälter oder einer Gegenstromkolonne mit Einbauten, erfolgen. Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise ca. 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden.

In einer bevorzugten Ausführungsform wird im Regenerationschritt eine Strippung durchgeführt, wobei aus dem Absorptionsmittel weitere saure Gasbestandteile freigesetzt werden. Die Strippung kann in einer mit Füllkörpern oder Packungen ausgestatteten Desorptionskolonne, in dem das Strippungsmittel dem Absorptionsmittel entgegenströmt (Stripper), durchgeführt werden. Vorzugsweise beträgt der Druck bei der Strippung 1 bis 3 bar absolut und die Temperatur 90 bis 130 °C, wobei mit heißem Gas oder Wasserdampf, bevorzugt mit Wasserdampf, gestrippt wird.

Vorteilhaft an dem erfindungsgemäßen Verfahren ist, daß wegen der höheren Absorptions- bzw. Desorptionsgeschwindigkeit der sauren Gasbestandteile in dem erfindungsgemäßen Absorptionsmittel, insbesondere von CO₂, Absorptions- bzw. Desorptionskolonnen wesentlich geringerer Bauhöhe eingesetzt werden können. Wegen der höheren Beladbarkeit und der geringeren Restbeladung des erfindungsgemäßen Absorptionsmittels mit den sauren Gasbestandteilen, insbesondere mit CO₂, können die Umlaufmengen des eingesetzten Absorptionsmittels verringert werden.

In einer bevorzugten Ausführungsform wird der Regenerationsschritt in mehreren aufeinanderfolgenden Teilschritten durchgeführt, wobei das nach (zeitlich) aufeinanderfolgenden Teilschritten erhaltene Absorptionsmittel eine abnehmende Beladung mit sauren Gasbestandteilen aufweist. Beispielsweise kann aus dem beladenen Absorptionsmittel in einer Entspannungskolonne ein erster Teil der sauren Gasbestandteile freigesetzt werden und anschließend gestrippt werden, wobei weitere saure Gasbestandteile freigesetzt werden und das Absorptionsmittel weitgehend regeneriert wird. Es kann auch schrittweise in mehreren (hintereinander geschalteten) Entspannungskolonnen, oder in mehreren Entspannungskolonnen und zusätzlich in einem Stripper, regeneriert werden. Bei Verwendung mehrerer Entspannungskolonnen, beispielsweise einer Vor- und einer Hauptentspannungskolonne, werden in der ersten Entspannungskolonne (Vorentspannungskolonne) vorzugsweise Inertgase und in den nachfolgenden Kolonnen saure Gasbestandteile freigesetzt.

Beispielsweise kann, wie in DE-A 25 51 717 beschrieben, eine Grobwäsche mit reinem Entspannungskreislauf (ohne Strippung) durchgeführt werden, wobei das beladene Absorptionsmittel über eine Entspannungsturbine entspannt und schrittweise in einer Vorentspannungskolonne und einer Hauptentspannungskolonne regeneriert wird. Die zuletzt beschriebene Variante des erfindungsgemäßen Verfahrens eignet sich insbesondere für Gase, die hohe Partialdrucke der auszuwaschenden sauren Gasbestandteile aufweisen und wenn an die Reinheit des gewaschenen Gases (Reingas) nur geringe Anforderungen gestellt werden.

In einer weiteren bevorzugten Ausführungsform des erfindungsgemäßen Verfahrens werden die in aufeinanderfolgenden Teilschritten des Absorptionsschrittes eingesetzten Teilströme des Absorptionsmittels nach aufeinanderfolgenden Teilschritten des Regenerierungsschrittes erhalten und weisen eine abnehmende Beladung mit sauren Gasbestandteilen auf. Dabei ist insbesondere ein Verfahren bevorzugt, bei dem das die sauren Gasbestandteile enthaltende Rohgas nacheinander mit einem ersten Teilstrom des Absorptionsmittels, das nach teilweiser Regenerierung in einer Entspannungskolonne und vor der Strippung, und einem zweiten Teilstrom des Absorptionsmittels, das nach der Strippung erhalten wird, in Berührung gebracht wird.

Beispielsweise kann, wie in DE-A 25 51 717 beschrieben, der Absorptionsschritt in zwei Teilschritten, einer Grob- und einer Feinwäsche, und der Regenerierungsschritt schrittweise durch Druckentspannung in einer Entspannungsturbine, einer Vorentspannungskolonne und einer Hauptentspannungskolonne und einer anschließenden Strippung durchgeführt werden, wobei der Teilstrom für die Grobwäsche von der Hauptentspannungskolonne und der Teilstrom des Absorptionsmittels für die Feinwäsche von der Strippung stammt.

Im folgenden wird die Erfindung anhand von in der Zeichnung dargestellten Ausführungsbeispielen näher beschrieben. Es zeigen:
- Figur 1:: eine schematische Darstellung einer bevorzugten Ausführungsform des erfindungsgemäßen Verfahrens;
- Figur 2:: relative CO₂-Gleichgewichtsbeladungen, die erfindungsgemäß relativ zu einem Vergleichsbeispiel erhalten werden;
- Figur 3:: relative Stoffühergangsgeschwindigkeiten von CO₂, die erfindungsgemäß relativ zu einem Vergleichsbeispiel erhalten werden;
- Figur 4:: H₂S-Gleichgewichtsbeladungen, die erfindungsgemäß und gemäß Vergleichsbeispielen erhalten werden;
- Figur 5:: Absorptionsverhalten Von CO₂, das erfindungsgemäß und gemäß einem Vergleichsbeispiel erhalten wird;
- Figur 6:: die erfindungsgemäß erhaltenen Stoffübergangsgeschwindigkeiten von CO₂ und H₂S, und
- Figur 7:: Löslichkeitskurven von Piperazin, die erfindungsgemäß und gemäß einem Vergleichsbeispiel gefunden werden.

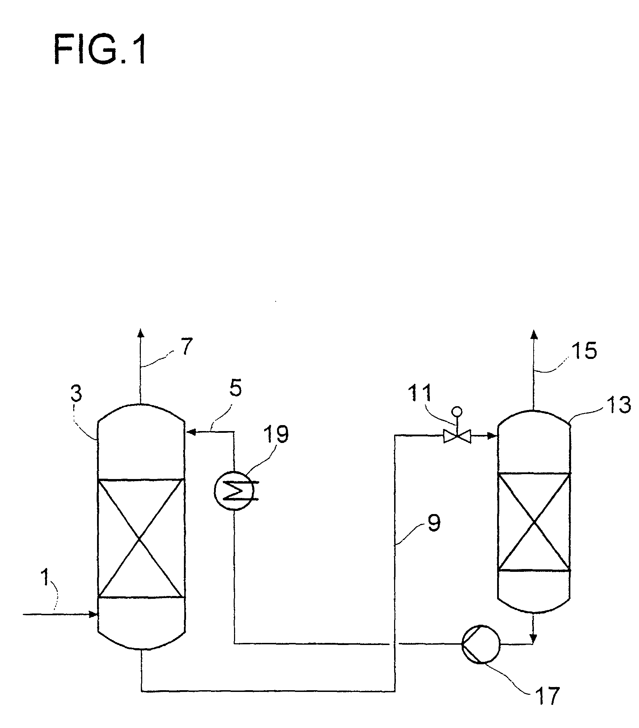

**Figur 1** ist eine schematische Darstellung einer bevorzugten Ausführungsform des erfindungsgemäßen Verfahrens. Über eine Zuleitung 1 wird an sauren Gasbestandteilen reiches Rohgas in einem im ganzen als 3 bezeichneten Absorber mit dem regenerierten Absorptionsmittel, das über die Absorptionsmittelleitung 5 zugeführt wird, in Kontakt gebracht. Dabei wird über eine Abgasleitung 7 ein an sauren Gasbestandteilen armes Reingas gewonnen. Über eine Absorptionsmittelleitung 9 und ein Drosselventil 11 wird das mit sauren Gasbestandteilen beladene Absorptionsmittel einer im ganzen mit 13 bezeichneten Desorptionskolonne (Entspannungkolonne oder Stripper) zugeleitet, in der das Absorptionsmittel unter Freisetzung saurer Gasbestandteile, welche die Desorptionskolonne über die Abgasleitung 15 verlassen, regeneriert wird. Das regenerierte Absorptionsmittel wird anschließend mittels einer Pumpe 17 über einen Wärmetauscher 19 der Absorptionskolonne wieder zugeführt.

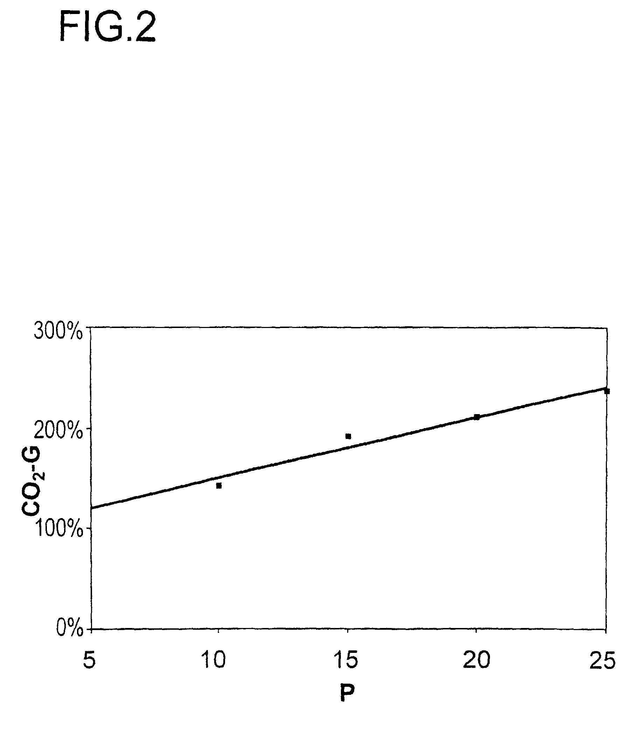

**Figur 2** zeigt die relative CO₂-Gleichgewichtsbeladung (CO₂ - G) in % eines Absorptionsmittels, das Piperazin gelöst in einer Mischung aus 60 Gew.-% Glycerin und Wasser enthält, im Verhältnis zur CO₂-Gleichgewichtsbeladung eines Vergleichs-Absorptionsmittels, das 5 Gew.-% Piperazin, 35 Gew.-% MDEA und 60 Gew.-% Wasser enthält, in Abhängigkkeit des Piperazingehaltes (P) in Gew.-%. Zur Messung der Gleichgewichtsbeladung wurden 100 ml Absorptionsmittel in einer thermostatisierten Frittenflasche (250 ml) bei 70°C und 1 bar mit einem Gasvolumenstrom von 10 Normalliter pro Stunde (Nl/h) mit Wasserdampf vorgesättigtem CO₂ über einen Zeitraum von 6 Stunden begast. Anschließend wurde die CO₂-Konzentration in der Lösung analytisch bestimmt und daraus die Gleichgewichtsbeladung in Normalliter Gas pro kg Absorptionsmittel (Nl/kg) berechnet.

Oberhalb eines Piperazingehaltes von ca. 10 Gew.-% weist das erfindungsgemäße Absorptionsmittel eine deutlich höhere Beladbarkeit mit CO₂ auf.

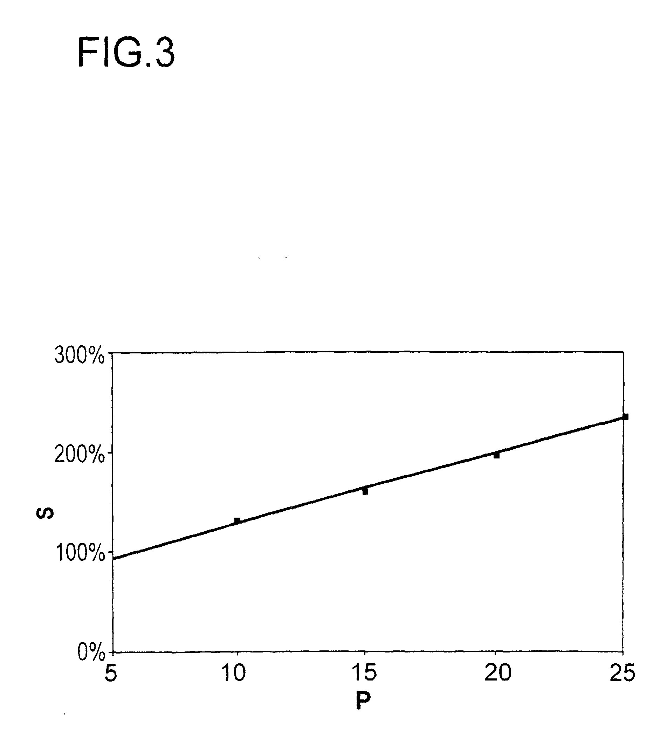

**Figur 3** zeigt die relative Stoffübergangsgeschwindigkeit (S) in % von CO₂ in den obenstehend (Figur 2) definierten Absorptionsmitteln in Abhängigkeit vom Piperazingehalt (P). Die Stoffübergangsgeschwindigkeit wurde in einer Laminarstrahlkammer mit wasserdampfgesättigtem Sauergas bei P_{gesamt} = 1 bar, T = 70°C, Strahldurchmesser = 0,94 mm, Strahllänge = 1 bis 8 cm, Volumenstrom des Absorptionsmittels = 1,8 ml/s bestimmt und wird in Gasvolumen in Normalkubikmeter pro Oberfläche des Absorptionsmittels, Druck und Zeit ermittelt [Nm³/(m² x bar x h)].

Oberhalb eines Piperazingehaltes von ca. 10 Gew.-% weist das erfindungsgemäße Absorptionsmittel eine deutlich höhere Stoffübergangsgeschwindigkeit für CO₂ auf.

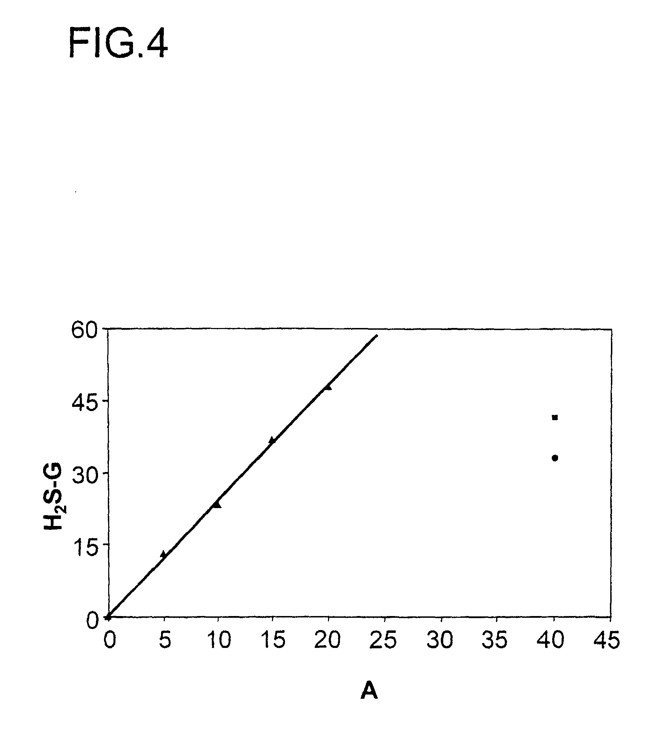

**Figur 4** zeigt die H₂S-Gleichgewichtsbeladung (H₂S - G) in % eines Absorptionsmittels, das Piperazin gelöst in einer Mischung aus Glycerin und 60 Gew.-% Wasser enthält (erfindungsgemäß, Dreiecke), im Vergleich zur H₂S-Gleichgewichtsbeladung eines Absorptionsmittels, das 40 Gew.-% MDEA in Wasser (Vergleichsbeispiel A, Kreis) bzw. 37 Gew.-% MDEA und 3 Gew.-% Piperazin in Wasser (Vergleichsbeispiel B, Quadrat) enthält, aufgetragen gegen den Gesamtamingehalt (A) in Gew.-%. Die H₂S-Gleichgewichtsbeladung wurde analog derjenigen von CO₂ bestimmt. Um eine vergleichbare Gleichgewichtsbeladung zu erzielen, ist erfindungsgemäß ein deutlich geringerer Gesamtamingehalt erforderlich.

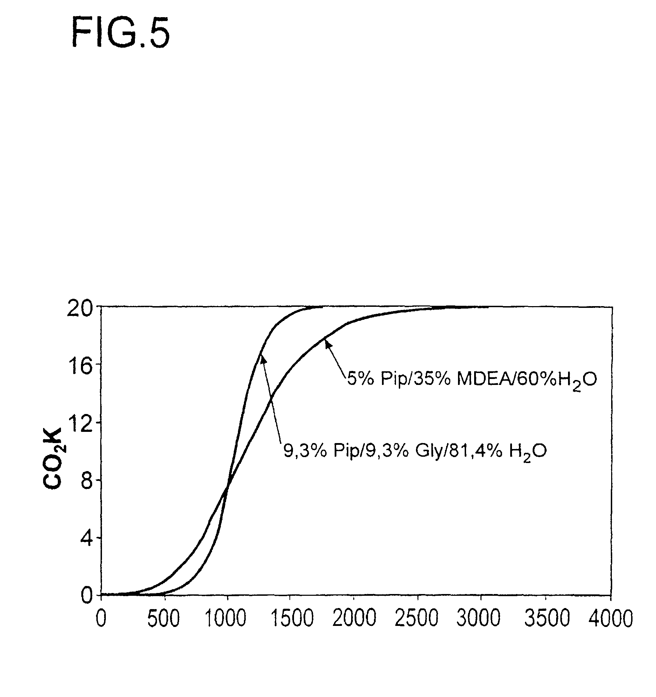

**Figur 5** zeigt das Absorptionsverhalten von CO₂ in einem Absorptionsmittels bestehend aus 9.3 Gew.-% Piperazin. 9,3 Gew.-% Glycerin und 81,4 Gew.-% Wasser (erfindungsgemäß) im Vergleich zu einem Absorptionsmittel mit identischer Gleichgewichtsbeladung, bestehend aus 5 Gew.-% Piperazin, 35 Gew.-% MDEA und 60 Gew.-% Wasser (Vergleichsbeispiel).

Die Messungen wurden wie folgt durchgeführt: in einer thermostatisierten Frittenflasche (250 ml) wurden 100 ml Absorptionsmittel bei 1 bar und 70°C während der Absorptionsphase mit 30 Nl/h eines wasserdampfgesättigten Gasgemisches aus 20 Vol.-% CO₂ und 80 Vol-% N₂ (Rohgas) begast. Die CO₂-Konzentration des im Anschluß an die Begasung getrockneten Gasstroms (Restgas) wurde mittels eines URAS-CO₂-Analysators online ermittelt.

Dargestellt ist die CO₂-Konzentration (CO₂-K) des Restgases in Vol.-% in Abhängigkeit von der Begasungszeit in sec.. Die Lösung ist gesättigt und somit die Gleichgewichtsbeladung erreicht, wenn die CO₂-Konzentration des Restgases gleich der CO₂-Konzentration des Rohgases ist, das heißt 20 Vol.-% beträgt. Die Gleichgewichtsbeladung wird beim erfindungsgemäßen Absorptionsmittel bereits nach 1800 sec, bei dem Vergleichs-Absorptionsmittel aber erst nach 3200 sec erreicht.

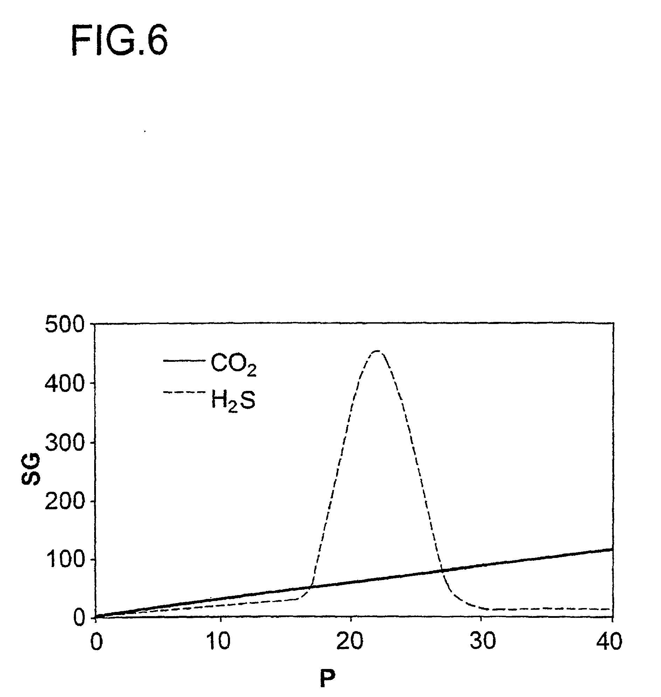

**Figur 6** zeigt schematisch die Stoffübergangsgeschwindigkeit (SG) in Nm³/(m² bar h) von H₂S (gestrichelte Linie) und CO₂ (durchgezogene Linie) in einem Absorptionsmittel, das Piperazin gelöst in einer Mischung aus Glycerin und 60 Gew.-% Wasser enthält, in Abhängigkeit vom Piperazingehalt (P) in Gew.-%. Die Stoffübergangsgeschwindigkeit von CO₂ und H₂S wurde wie obenstehend für CO₂ beschrieben gemessen.

Die Stoffübergangsgeschwindigkeit von H₂S weist in dem erfindungsgemäßen Absorptionsmittel ein deutliches Maximum auf, die in diesem Bereich die Stoffübergangsgeschwindigkeit von CO₂ überschritten wird.

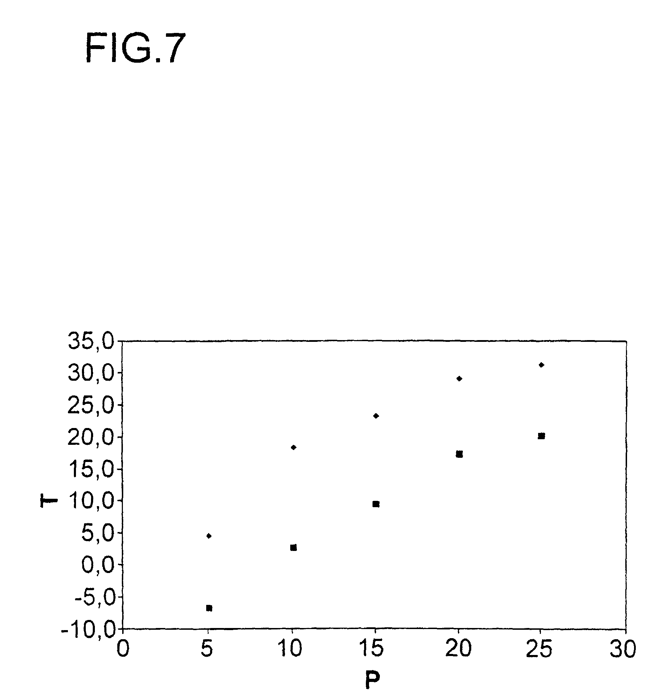

**Figur 7** zeigt den Temperatur (T) in °C/Konzentrations-Verlauf [Piperazingehalt (P) in Gew.-%] der Piperazinlöslichkeit in einer wäßrigen Lösung, die 30 Gew.-% Lösungsvermittler enthält. Erfindungsgemäß wird als Lösungsvermittler Glycerin eingesetzt (Rechtecke), gemäß Vergleichsbeispiel wird als Lösungsvermittler MDEA eingesetzt (Rauten).

Die Piperazinlöslichkeit wurde in Anlehnung an die ASTM-Methode D 2386-67 (entspricht DIN 51421) ermittelt, indem die entsprechende Lösung unter Rühren mit einem geringen Temperaturgradienten abgekühlt wurde. Die Löslichkeitstemperatur wurde durch Beobachten des ersten Kristall-Ausfalls, erkennbar an der Trübung der Lösung, ermittelt.

Man erkennt, daß im erfindungsgemäßen Absorptionsmittel bei gleicher Piperazin-Konzentration die Löslichkeitstemperatur um mehr als 10°C unterhalb derjenigen des Vergleichsbeispiels liegt.

## Patentansprüche

1. Verfahren zur Entfernung saurer Gasbestandteile, aus der Gruppe bestehend aus CO₂, H₂S, COS, CS₂ und Merkaptanen, aus Gasen, bei dem in einem Absorptionsschritt ein an sauren Gasbestandteilen reiches Rohgas in Kontakt mit einem Absorptionsmittel gebracht wird, wodurch ein an sauren Gasbestandteilen armes Reingas und ein mit sauren Gasbestandteilen beladenes Absorptionsmittel erhalten wird, **dadurch gekennzeichnet, daß** als Absorptionsmittel ein Gemisch enthaltend
a) 5 bis 30 Gew.-% eines oder mehrerer unsubstituierter und/oder mit OH, C₁-C₃-Alkyl und/oder C₁-C₃-Hydroxyalkyl ein- oder mehrfach am Kohlenstoff substituierter mono- oder bicyclischer Stickstoff-Heterocyclen mit 5 bis 14 Ringatomen und pro Ring 2 heterocyclisch gebundenen Stickstoffatomen als Komponente A,
b) 2 bis 45 Gew.-% eines mehrwertigen Alkohols ohne Aminogruppe als Komponente B,
c) 0 bis 60 Gew.-% eines aliphatischen Aminoalkohols als Komponente C,
d) 30 bis 70 Gew.-% Wasser als Komponente D,
e) 0 bis 3 5 Gew.-% K₂CO₃ als Komponente E,
wobei die Summe der Komponenten A, B, C, D und E sowie 0 bis 5 Gew.% üblicher Komponenten wie Entschäumer, Korrosionsinhibitoren und Flockungshilfsmittel 100 Gew.-% ergibt, eingesetzt wird.

2. Verfahren nach Anspruch 1, **dadurch gekennzeichnet, daß** das Absorptionsmittel als Komponente A unsubstituiertes und/oder mit OH, C₁-C₃-Alkyl und/oder C₁-C₃-Hydroxyalkyl ein- oder mehrfach am Kohlenstoffatom substituiertes Piperazin enthält.

3. Verfahren nach Anspruch 1 oder 2, **dadurch gekennzeichnet, daß** das Absorptionsmittel als Komponente A unsubstituiertes Piperazin enthält.

4. Verfahren nach einem der Ansprüche 1 bis 3, **dadurch gekennzeichnet, daß** als Alkohol Glycerin, 1,3-Propandiol, Neopentylglykol oder Trimethylolpropan enthalten sind.

5. Verfahren nach einem der Ansprüche 1 bis 4, **dadurch gekennzeichnet, daß** das Absorptionsmittel aus den Komponenten A, B und D besteht.

6. Verfahren nach Anspruch 5, **dadurch gekennzeichnet, daß** das Absorptionsmittel aus 15 bis 30 Gew.-% Piperazin, 3 bis 35 Gew.-% Glycerin, 1-3 Propandiol, Neopentylglykol oder Trimethylolpropan und 35 bis 72 Gew.-% Wasser besteht.

7. Verfahren nach einem der Ansprüche 1 bis 4, **dadurch gekennzeichnet, daß** das Absorptionsmittel aus den Komponenten A, B, C und D besteht.

8. Verfahren nach Anspruch 7, **dadurch gekennzeichnet, daß** das Absorptionsmittel aus 8 bis 20 Gew.-% Piperazin, 3 bis 35 Gew.-% Glycerin, 20 bis 50 Gew.-% Methyldiethanolamin und 30 bis 69 Gew.-% Wasser besteht.

9. Verfahren nach einem der Ansprüche 1 bis 8, **dadurch gekennzeichnet, daß** der Absorptionsschritt in mehreren aufeinanderfolgenden Teilschritten durchgeführt wird, wobei das die sauren Gasbestandteilen enthaltende Rohgas in jedem der Teilschritte mit jeweils einem Teilstrom des Absorptionsmittels in Berührung gebracht wird.

10. Verfahren nach einem der Ansprüche 1 bis 9, **dadurch gekennzeichnet, daß** ein Regenerationsschritt durchgeführt wird, in dem die sauren Gasbestandteile aus dem beladenen Absorptionsmittel freigesetzt werden, wobei ein regeneriertes Absorptionsmittel erhalten wird.

11. Verfahren nach einem der Ansprüche 1 bis 10, **dadurch gekennzeichnet, daß** das regenerierte Absorptionsmittel anschließend in den Absorptionsschritt zurückgeführt wird.

12. Verfahren nach einem der Ansprüche 9 bis 11, **dadurch gekennzeichnet, daß** im Regenerationsschritt eine Strippung durchgeführt wird.

13. Verfahren nach einem der Ansprüche 9 bis 12, **dadurch gekennzeichnet, daß** der Regenerationsschritt in mehreren zeitlich aufeinanderfolgenden Teilschritten durchgeführt wird, wobei das nach zeitlich aufeinanderfolgenden Teilschritten erhaltene Absorptionsmittel eine abnehmende Beladung mit sauren Gasbestandteilen aufweist.

14. Verfahren nach Anspruch 13, **dadurch gekennzeichnet, daß** bei aufeinanderfolgenden Teilschritten des Absorptionsschrittes die eingesetzten Teilströme nach aufeinanderfolgenden Teilschritten des Regenerierungsschrittes erhalten werden und eine abnehmende Beladung mit sauren Gasbestandteilen aufweisen.

15. Absorptionsmittel, enthaltend
a) 5 bis 30 Gew.-% eines oder mehrerer unsubstituierter und/oder mit OH, C₁-C₃-Alkyl und/oder C₁-C₃-Hydroxyalkyl ein- oder mehrfach am Kohlenstoff substituierter mono- oder bicyclischer Stickstoff-Heterocyclen mit 5 bis 14 Ringatomen und pro Ring 2 heterocyclisch gebundenen Stickstoffatomen als Komponente A,
b) 2 bis 45 Gew.-% eines mehrwertigen Alkohols ohne Aminogruppe als Komponente B,
c) 0 bis 60 Gew.-% eines aliphatischen Alkanolamins als Komponente C,
d) 30 bis 70 Gew.-% Wasser als Komponente D,
e) 0 bis 35 Gew.-% K₂CO₃ als Komponente E,
wobei die Summe der Komponenten A, B, C, D und E sowie 0 bis 5 Gew.% üblicher Komponenten wie Entschäumer, Korrosionsinhibitoren und Flockungshilfsmittel 100 Gew.-% ergibt.

## Claims

1. A process for removing acidic gas constituents, of the group consisting of CO₂, H₂S, COS, CS₂ and mercaptans, from gases, in which, in an absorption step, an untreated gas rich in acidic gas constituents is brought into contact with an absorption medium, as a result of which a clean gas low in acidic gas constituents and an absorption medium laden with acidic gas constituents are obtained, which process comprises using as absorption medium a mixture comprising
a) from 5 to 30% by weight of one or more monocyclic or bicyclic nitrogen heterocycles which are unsubstituted and/or monosubstituted or polysubstituted on the carbon by OH, C₁-C₃ alkyl and/or C₁-C₃ hydroxyalkyl and which have from 5 to 14 ring atoms and 2 heterocyclically bound nitrogen atoms per ring as component A,
b) from 2 to 45% by weight of a polyhydric alcohol without amino group as component B,
c) from 0 to 60% by weight of an aliphatic aminoalcohol as component C,
d) from 30 to 70% by weight of water as component D,
e) from 0 to 35% by weight of K₂CO₃ as component E,
where the sum of components A, B, C, D and E and 0 to 5% by weight of customary components such as antifoaming agents, corrosion inhibitors and flocculation aids is 100% by weight.

2. A process as claimed in claim 1, wherein the absorption medium as component A comprises piperazine which is unsubstituted and/or monosubstituted or polysubstituted on the carbon atom by OH, C₁-C₃ alkyl and/or C₁-C₃ hydroxyalkyl.

3. A process as claimed in claim 1 or 2, wherein the absorption medium as component A comprises unsubstituted piperazine.

4. A process as claimed in one of claims 1 to 3, wherein glycerol, 1,3-propanediol, neopentyl glycol or trimethylol-propane is present as alcohol.

5. A process as claimed in one of claims 1 to 4, wherein the absorption medium consists of the components A, B and D.

6. A process as claimed in claim 5, wherein the absorption medium consists of 15 to 30% by weight of piperazine, 3 to 35% by weight of glycerol, 1,3-propanediol, neopentyl glycol or trimethylolpropane and 35 to 72% by weight of water.

7. A process as claimed in one of claims 1 to 4, wherein the absorption medium consists of the components A, B, C and D.

8. A process as claimed in claim 7, wherein the absorption medium consists of 8 to 20% by weight of piperazine, 3 to 35% by weight of glycerol, 20 to 50% by weight of methyldiethanolamine and 30 to 69% by weight of water.

9. A process as claimed in one of claims 1 to 8, wherein the absorption step is carried out in a plurality of sequential partial steps, the untreated gas comprising the acidic gas constituents being brought into contact with a partial stream of the absorption medium in each case in each of the partial steps.

10. A process as claimed in one of claims 1 to 9, wherein a regeneration step is carried out in which the acidic gas constituents are released from the laden absorption medium, a regenerated absorption medium being obtained.

11. A process as claimed in one of claims 1 to 10, wherein the regenerated absorption medium is then recycled to the absorption step.

12. A process as claimed in one of claims 9 to 11, wherein a stripping is carried out in the regeneration step.

13. A process as claimed in one of claims 9 to 12, wherein the regeneration step is carried out in a plurality of partial steps which are sequential in time, the absorption medium obtained after partial steps which are sequential in time having a decreasing loading with acidic gas constituents.

14. A process as claimed in claim 13, wherein the partial streams used in sequential partial steps of the absorption step are obtained after sequential partial steps of the regeneration step and have a decreasing loading with acidic gas constituents.

15. An absorption medium which comprises
a) from 5 to 30% by weight of one or more monocyclic or bicyclic nitrogen heterocycles which are unsubstituted and/or monosubstituted or polysubstituted on the carbon by OH, C₁-C₃ alkyl and/or C₁-C₃ hydroxyalkyl and which have from 5 to 14 ring atoms and 2 heterocyclically bound nitrogen atoms per ring as component A,
b) from 2 to 45% by weight of a polyhydric alcohol without amino group as component B,
c) from 0 to 60% by weight of an aliphatic alkanolamine as component C,
d) from 30 to 70% by weight of water as component D,
e) from 0 to 35% by weight of K₂CO₃ as component E,
where the sum of components A, B, C, D and E and 0 to 5% by weight of customary components such as antifoaming agents, corrosion inhibitors and flocculation aids is 100% by weight.

## Revendications

1. Procédé pour éliminer de gaz des constituants gazeux acides, choisis dans l'ensemble comprenant CO₂, H₂S, COS, CS₂ et les mercaptans, dans lequel, dans une étape d'absorption, on met un gaz brut, riche en constituants gazeux acides, en contact avec un agent absorbant, ce qui permet d'obtenir un gaz pur, pauvre en constituants gazeux acides, et un agent absorbant chargé de constituants gazeux acides, **caractérisé en ce qu'**on utilise en tant qu'agent absorbant un mélange contenant
a) en tant que composant A, 5 à 30 % en poids d'un ou plusieurs composés hétérocycliques azotés mono- ou bicycliques ayant de 5 à 14 atomes nucléaires, une ou plusieurs fois substitués sur l'atome de carbone par des substituants OH, alkyle en C₁-C₃ et/ou hydroxyalkyle en C₁-C₃, et ayant par noyau deux atomes d'azote à liaison hétérocyclique,
b) en tant que composant B, 2 à 45 % en poids d'un polyalcool sans groupe amino,
c) en tant que composant C, 0 à 60 % en poids d'un amino-alcool aliphatique,
d) en tant que composant D, 30 à 70 % en poids d'eau,
e) en tant que composant E, 0 à 35 % en poids de K₂CO₃,
la somme des composants A, B, C, D et E, ainsi que de 0 à 5 % en poids de composants usuels tels que des antimousses, des inhibiteurs de corrosion et des auxiliaires de floculation, faisant 100 % en poids.

2. Procédé selon la revendication 1, **caractérisé en ce que** l'agent absorbant contient en tant que composant A une pipérazine non substituée, ou une ou plusieurs fois substituée sur l'atome de carbone par des substituants OH, alkyle en C₁-C₃ et/ou hydroxyalkyle en C₁-C₃.

3. Procédé selon la revendication 1 ou 2, **caractérisé en ce que** l'agent absorbant contient en tant que composant A de la pipérazine non substituée.

4. Procédé selon l'une des revendications 1 à 3, **caractérisé en ce que** sont présents en tant qu'alcool le glycérol, le 1,3-propanediol, le néopentylglycol ou le triméthylolpropane.

5. Procédé selon l'une des revendications 1 à 4, **caractérisé en ce que** l'agent absorbant est constitué des composants A, B et D.

6. Procédé selon la revendication 5, **caractérisé en ce que** l'absorbant est constitué de 15 à 30 % en poids de pipérazine, de 3 à 35 % en poids de glycérol, de 1 à 3 % en poids de propanediol, de néopentylglycol ou de triméthylolpropane, et de 35 à 72 % en poids d'eau.

7. Procédé selon l'une des revendications 1 à 4, **caractérisé en ce que** l'agent absorbant est constitué des composants A, B, C et D.

8. Procédé selon la revendication 7, **caractérisé en ce que** l'agent absorbant est constitué de 8 à 20 % en poids de pipérazine, de 3 à 35 % en poids de glycérol, de 20 à 50 % en poids de méthyldiéthanolamine et de 30 à 69 % en poids d'eau.

9. Procédé selon l'une des revendications 1 à 8, **caractérisé en ce que** l'étape d'absorption est mise en oeuvre en plusieurs étapes partielles successives, le gaz brut contenant les constituants gazeux acides étant au cours de chacune des étapes partielles mis en contact avec un courant partiel de l'agent absorbant.

10. Procédé selon l'une des revendications 1 à 9, **caractérisé en ce qu'**on procède à une étape de régénération, dans laquelle les constituants gazeux acides sont débarrassés de l'agent absorbant chargé, et l'on obtient un agent absorbant régénéré.

11. Procédé selon l'une des revendications 1 à 10, **caractérisé en ce que** l'agent absorbant régénéré est ensuite renvoyé dans l'étape d'absorption.

12. Procédé selon l'une des revendications 9 à 11, **caractérisé en ce qu'**on procède à un épuisement dans l'étape de régénération.

13. Procédé selon l'une des revendications 9 à 12, **caractérisé en ce que** l'étape de régénération est mise en oeuvre en plusieurs étapes partielles successives dans le temps, l'agent absorbant obtenu après les étapes partielles successives dans le temps présentant une charge décroissante de constituants gazeux acides.

14. Procédé selon la revendication 13, **caractérisé en ce que**, lors des étapes partielles successives de l'étape d'absorption, les courants partiels utilisés sont maintenus après les étapes partielles successives de l'étape de régénération, et présentent une charge décroissante de constituants gazeux acides.

15. Agent absorbant contenant
a) en tant que composant A, 5 à 30 % en poids d'un ou plusieurs composés hétérocycliques azotés mono- ou bicycliques ayant de 5 à 14 atomes nucléaires, une ou plusieurs fois substitués sur l'atome de carbone par des substituants OH, alkyle en C₁-C₃ et/ou hydroxyalkyle en C₁-C₃, et ayant par noyau deux atomes d'azote à liaison hétérocyclique,
b) en tant que composant B, 2 à 45 % en poids d'un polyalcool sans groupe amino,
c) en tant que composant C, 0 à 60 % en poids d'un amino-alcool aliphatique,
d) en tant que composant D, 30 à 70 % en poids d'eau,
e) en tant que composant E, 0 à 35 % en poids de K₂CO₃,
la somme des composants A, B, C, D et E, ainsi que de 0 à 5 % en poids de composants usuels tels que des antimousses, des inhibiteurs de corrosion et des auxiliaires de floculation, faisant 100 % en poids.
